**Europäisches Patentamt**

**European Patent Office**

**Office européen des brevets**

(19)

(11) Veröffentlichungsnummer: **0 214 582**
**B1**

(12) **EUROPÄISCHE PATENTSCHRIFT**

(45) Veröffentlichungstag der Patentschrift:
**26.10.88**

(51) Int. Cl.⁴: **F 16 L 1/00,** F 16 L 55/00

(21) Anmeldenummer: **86112034.3**

(22) Anmeldetag: **30.08.86**

(54) **Verstellbare Lehre zum Verlegen von Rohren sowie Verfahren zum Einschieben eines Endes eines Rohres in das muffenartige Ende eines anderen Rohres mit Hilfe der Lehre.**

(30) Priorität: **05.09.85 DE 3531648**

(43) Veröffentlichungstag der Anmeldung:
**18.03.87 Patentblatt 87/12**

(45) Bekanntmachung des Hinweises auf die Patenterteilung:
**26.10.88 Patentblatt 88/43**

(84) Benannte Vertragsstaaten:
**AT BE CH DE FR GB IT LI LU NL SE**

(56) Entgegenhaltungen:
**AT - B - 327 625**

(73) Patentinhaber: **Grundhöfer, Hermann, Mühlentriesch 33,
D-5504 Hentern (DE)**

(72) Erfinder: **Grundhöfer, Hermann, Mühlentriesch 33,
D-5504 Hentern (DE)**

(74) Vertreter: **Schönherr, Wolfgang et al, Patentanwälte
Wolfgang Schönherr Dipl.-Ing. Karl-Heinz Serwe
Hawstrasse 28, D-5500 Trier (DE)**

## Beschreibung

Die Erfindung betrifft eine verstellbare Lehre zum Verlegen von Rohren, bestehend aus einem Führungskörper, der drei etwa in gleichem Abstand zueinander angeordnete, etwa parallel zueinander verlaufende Holme aufweist, deren vordere Endabschnitte zur Mittelachse des Führungskörpers hin abgewinkelt ausgebildet sind, und mit einer Spannvorrichtung zur Arretierung der in einem Rohr eingesetzten Lehre im Rohrinneren, sowie ein Verfahren zum Einschieben eines Endes eines Rohres in das muffenartige Ende eines anderen Rohres mit Hilfe der Lehre.

Es ist bekannt, zum Abdichten des eingeschobenen Endes eines Rohres im muffenartigen Ende eines anderen Rohres einen elastischen Dichtring zu verwenden. Üblicherweise wird vor dem Einschieben des einen Endes des einen Rohres dieser Dichtring auf das Ende des anderen Rohres aufgelegt und dann das Ende dieses Rohres in das muffenartige Ende des anderen Rohres eingeschoben.

Wird jedoch das eine Rohr nicht genau zentral in das muffenartige Ende des anderen Rohres eingeschoben, so verschiebt sich der aufgelegte Dichtring, so dass der Dichtring entweder von Hand nachträglich in die richtige Lage gebracht werden muss, oder, was sehr viel häufiger vorkommt, das Rohr wieder aus dem anderen Rohr herausgezogen werden muss und der Dichtring neu aufgelegt werden muss. Darüber hinaus besteht auch die Gefahr, dass die Rohrenden beschädigt werden.

Aus der AT-A-327 625 ist eine Lehre der eingangs genannten Art bekannt, die zur Handhabung des zu verlegenden Rohres in das zu verlegende Rohr eingesetzt wird. Diese Lehre weist einen nach aussen ragenden Tragarm auf, über den die Lehre zusammen mit dem Rohr gehandhabt werden kann. Diese bekannte Lehre weist einen vorderen Abschnitt mit schwenkbaren Armen auf, die zur Führung des zu verlegenden Rohres in den bereits verlegten Rohrstrang und zur Arretierung der Lehre im bereits verlegten Rohrstrang dient. Diese bekannte Lehre weist darüber hinaus eine Schubvorrichtung zum Abschieben des Rohres auf. Nachteilig ist bei dieser Lehre, dass die zur Handhabung des zu verlegenden Rohres dienende Lehre jeweils den Abmessungen des zu verlegenden Rohres, insbesondere der Länge des zu verlegenden Rohres angepasst sein muss. Da wesentliche Elemente dieser Lehre in Rohrmitte verlaufen, ist eine optische Vermessung der Rohre während des Einsatzes der Lehre nicht möglich.

Demgegenüber besteht die Aufgabe der Erfindung darin, eine Lehre der eingangs genannten Art vorzuschlagen, mit der ein einfaches und schnelles Einschieben des einen Endes eines Rohres in das andere Ende eines Rohres gewährleistet ist, ohne dass dabei die Gefahr von Beschädigungen der Rohre und von Verschiebungen eines aufgesetzten Dichtringes besteht, wobei ausserdem eine optische Vermessung der zu verlegenden Rohre während des Einsatzes der Lehre möglich ist.

Diese Aufgabe wird dadurch gelöst, dass zwei Holme fest miteinander verbunden sind, dass der dritte Holm mit dem einen Ende von Querstegen fest verbunden ist, deren andere Enden mit dem einen der beiden fest verbundenen Holme um in Holmlängsrichtung verlaufende Achsen schwenkbar verbunden sind, und dass zwischen dem dritten Holm und dem vorderen Holm der beiden fest miteinander verbundenen Holme die Spannvorrichtung zum Auseinanderspreizen der Holme angeordnet ist.

Vorteilhaft sind mit dem dritten Holm die einen Enden von Hebeln gelenkig verbunden, deren andere Enden auf dem anderen Holm der beiden fest miteinander verbundenen Holme verschiebbar geführt sind, wobei in Arretierstellung die Hebel etwa rechtwinklig zu den Holmen stehen.

Vorzugsweise hat die Spannvorrichtung ein im Inneren des Führungskörpers verlaufendes Bedienelement, das einen von Hand oder mit einem Haken ergreifbaren Handgriff im vorderen Abschnitt des Führungskörpers trägt. Vorzugsweise ist das Bedienelement der Spannvorrichtung als Stange ausgebildet, die mit den Hebeln gelenkig verbunden ist.

Vorteilhaft ist der eine Hebel nahe dem vorderen Ende und der andere Hebel am hinteren Ende des Führungskörpers angeordnet.

Vorzugsweise ist die Länge der Stege, der Querstege und der Hebel teleskopartig einstellbar und festlegbar.

Bei einer weiteren vorteilhaften Ausführungsform ist der vordere Abschnitt eines Holmes geradlinig ausgebildet.

Bei einer anderen vorteilhaften Ausführungsform ist ein Hebel um eine zum Führungskörper tangentiale Achse schwenkbar gelagert, wobei der Hebel von einer vorgespannten Feder oder dgl. derart gehalten ist, dass ein Hebelarm des Hebels den Holm nach aussen überragt.

Bei einem Verfahren zum Einschieben eines Endes eines Rohres in das muffenartige Ende eines anderen Rohres mit Hilfe der erfindungsgemässen Lehre wird vorteilhaft zunächst die Lehre derartig in das Innere des anderen Rohres eingesetzt und arretiert, dass der konisch sich verjüngende Endabschnitt sowie ein kleiner zylindrischer Abschnitt der Lehre das muffenartige Ende des anderen Rohres überragen, wird dann das eine Ende des einen Rohres über die Lehre in das muffenartige Ende des anderen Rohres eingeschoben und wird anschliessend die Lehre gelöst und durch das eine Rohr aus dem anderen Rohr herausgezogen.

Die Erfindung ist in den Zeichnungen beispielhaft dargestellt.

Es zeigen:

Fig. 1 eine in einem Rohr eingesetzte Lehre in Arretierstellung in Seitenansicht,

Fig. 2 die Lehre nach Fig. 1 in Ansicht auf das muffenartige Ende des Rohres,

Fig. 3 die Lehre in Arretierstellung im Schnitt nach III-III der Fig. 2,

Fig. 4 die Lehre in Arretierstellung im Schnitt nach IV-IV der Fig. 2,

Fig. 5 die Lehre in Arretierstellung im Schnitt nach V-V der Fig. 2,

Fig. 6 die Lehre in Freigabestellung in Ansicht auf das muffenartige Ende des Rohres,

Fig. 7 die Lehre in Freigabestellung im Schnitt nach VII-VII der Fig. 6,

Fig. 8 eine andere Ausführungsform einer Lehre in eingesetztem Zustand im Längsschnitt und

Fig. 9 die Lehre nach Fig. 8 im Querschnitt.

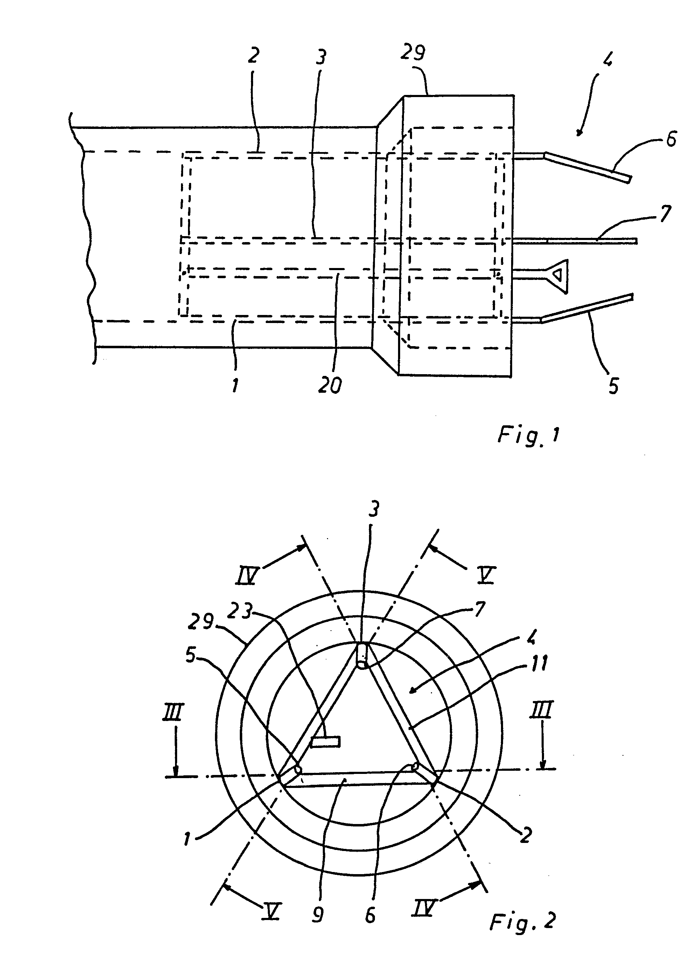

Nach den Fig. 1 bis 5 weist eine Lehre einen Führungskörper (4) mit drei im gleichen Abstand zueinander angeordneten und etwa parallel zueinander verlaufenden Holmen (1, 2 und 3) auf, deren vordere Endabschnitte (5, 6 und 7) zur Mittelachse des Führungskörpers (4) hin abgewinkelt ausgebildet sind.

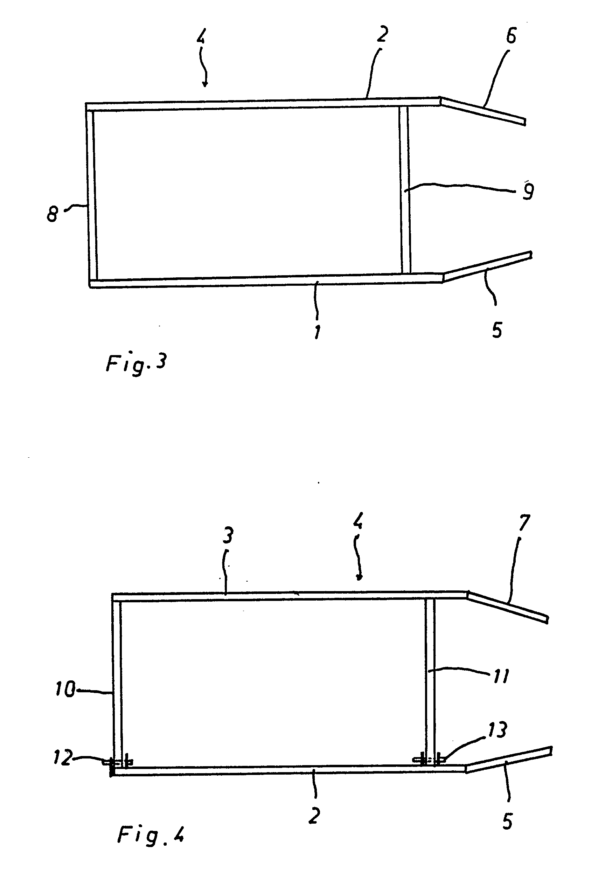

Nach den Fig. 2 und 3 sind die beiden Holme (1) und (2) durch quer zu ihnen verlaufende Stege (8 und 9) fest miteinander verbunden. Wie die Fig. 2 und 4 zeigen, ist der dritte Holm (3) mit dem einen Ende von Querstegen (10 und 11) fest verbunden, deren andere Enden mit dem Holm (2) um in Holmlängsrichtung verlaufende Achsen (12, 13) schwenkbar verbunden sind.

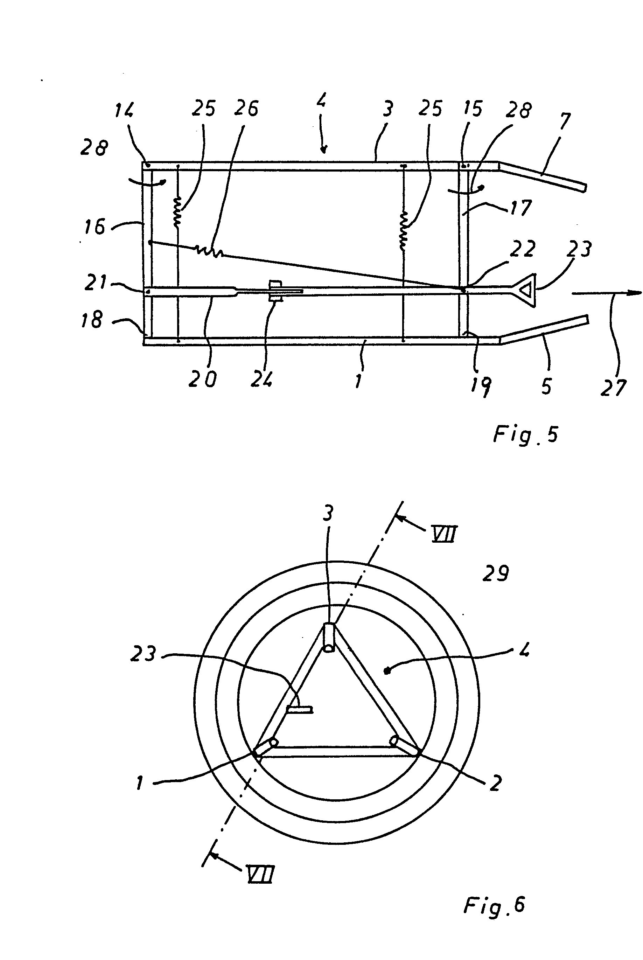

Wie die Fig. 2 und 5 erkennen lassen, sind mit dem dritten Holm (3) die einen Enden (14, 15) von Hebeln (16, 17) gelenkig verbunden, deren andere Enden (18, 19) auf dem Holm (1) verschiebbar geführt ist, der fest mit dem Holm (2) verbunden ist.

Mit den Hebeln (16, 17) ist eine als Bedienelement (20) ausgebildete Stange durch Gelenke (21, 22) verbunden. Das Bedienelement (20) weist im vorderen Abschnitt des Führungskörpers (4) einen von Hand oder mit einem Haken ergreifbaren Handgriff (23) auf. Wie die Fig. 5 ferner zeigt, besteht die Stange aus zwei teleskopartig ineinandergeführten Abschnitten, die durch eine Stellmutter (24) derart miteinander verbunden sind, da die wirksame Länge des Bedienelementes (20) zwischen den Hebeln (16, 17) veränderbar ist.

Die Fig. 5 zeigt weiter, dass die Holme (1) und (3) durch vorgespannte Zugfedern (25) miteinander verbunden sind. Ferner ist zwischen dem Bedienelement (20) und dem Hebel (16) eine vorgespannte Feder (26) angeordnet.

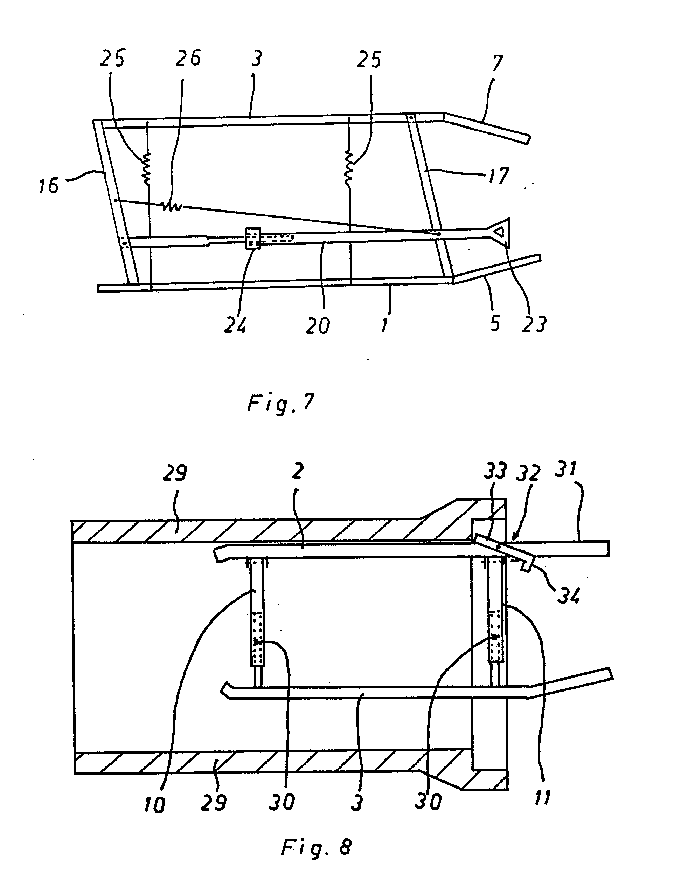

Wird das Bedienelement (20) in Richtung des mit (27) bezeichneten Pfeiles entgegen der Wirkung der vorgepannten Feder (26) bewegt, so schwenken die Hebel (16 und 17) in Richtung der mit (28) bezeichneten Pfeile um die Gelenke (14 und 15) in die in Fig. 7 dargestellte Freigabestellung. Gleichzeitig schwenkt der Holm (3) aufgrund der Wirkung der vorgespannten Zugfedern (25) um die Achsen (12 und 13) des Holmes (2), so dass sich der Holm (3) dem Holm (1) nähert, wie dies in Fig. 6 dargestellt ist.

In dieser Freigabestellung kann der Führungskörper (4) in das muffenartige Ende eines Rohres (29) aus Beton soweit eingeschoben werden, dass die vorderen Endabschnitte (5, 6 und 7) sowie ein kleiner Abschnitt der Holme (1, 2 und 3) das Ende des Rohres (29) überragen, wie dies in Fig. 1 dargestellt ist. Anschliessend wird das Bedienelement (20) entgegen der mit dem Pfeil (27) bezeichneten Richtung nach hinten geschoben, so dass die Hebel (16 und 17) in die in Fig. 5 gezeigte Stellung gelangen. Dabei spreizt sich der Holm (3) von dem Holm (1) weg in die in Fig. 2 gezeigte Stellung, in der die Holme (1, 2 und 3) am Inneren des Rohres (29) aus Beton anliegen und so den Führungskörper (4) im Rohrinneren des Rohres (29) verklemmen, wie dies in den Fig. 1 und 2 dargestellt ist.

Nunmehr kann ein weiteres, nichtgezeigtes Rohr aus Beton mit seinem entsprechenden Ende auf den Führungskörper (4) aufgeschoben werden und so genau zentriert in das muffenartige Ende des Rohres (29) geschoben werden. Ein auf dieses Rohr aufgesetzter Dichtungsring wird dadurch gleichmässig in das muffenartige Ende des Rohres (29) eingeschoben, so dass die beiden Rohre abgedichtet sind. Gleichzeitig werden Beschädigungen der Rohrenden verhindert.

Dadurch, dass in Arretierstellung des Führungskörpers (4) die Hebel (16 und 17) senkrecht zu den Holmen (1) und (3) stehen und aufgrund der vorgespannten Zugfeder (26) ist gewährleistet, dass der Führungskörper (4) während des Einschiebens im Innern des Betonrohres (29) arretiert bleibt.

Nach dem Einschieben des Rohres kann mit Hilfe eines Hakens durch das eingeschobene Rohr hindurch der Handgriff (23) des Bedienelementes (20) erfasst werden und in Richtung des mit (27) in Fig. 5 bezeichneten Pfeiles gezogen werden. Dadurch klappt der Führungskörper (4) in die in Fig. 6 gezeigte Freigabestellung. Durch weiteres Ziehen an dem Haken wird der Führungskörper (4) aus dem Rohr (29) und durch das neu eingeschobene Rohr hindurch nach vorne gezogen und kann in diesem Rohr, wie oben ausgeführt, erneut arretiert werden, um ein weiteres Rohr einzuschieben.

Gegenüber dem bisherigen Verfahren bietet das erfindungsgemässe Verfahren den Vorteil, dass eine Arbeitskraft gegenüber bisher zwei Arbeitskräften eingespart wird.

Durch Drehen der Stellmutter (24) des Bedienelementes (20) kann die wirksame Länge des Bedienelementes zwischen den Hebeln (16 und 17) verändert werden. Durch diese Verstellung wird die Stellung der Hebel (16 und 17) zueinander verändert. Verlaufen diese beiden Hebel nicht parallel zueinander, so erhält der Führungskörper (4) insgesamt leicht konische Form. Da erfindungsgemäss das Rohrinnere von Rohren nie genau zylinderförmig, sondern stets leicht konisch ausgebildet ist, kann durch Verwellen der Stellmutter (24) ein exakter Sitz des Führungskörpers (4) auch in derartigen Rohren gewährleistet werden.

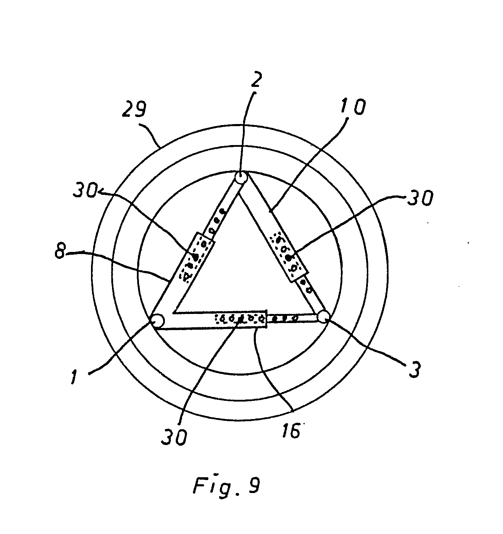

Bei der Ausführungsform einer Lehre nach den Fig. 8 und 9 sind die die Holme (1) und (2) verbindenden Stege (8 und 9), die die Holme (1 und 2) verbindenden Querstege (10 und 11) sowie die die Holme (1) und (3) verbindenden Hebel (16 und 17) in ihrer Länge teleskopartig einstellbar und durch Bolzen (30) oder dgl. festlegbar. Dadurch kann der Führungskörper (4) der Lehre an den jeweiligen Rohrdurchmesser des zu verlegenden Rohres (29) in einfacher Weise angepasst werden.

Wie weiterhin Fig. 8 zeigt, ist der vordere Abschnitt (31) des Holmes (2), der im Rohr (29) oben liegt, nicht wie der vordere Abschnitt (6) des Holmes (2) der Ausführungsform der Lehre nach Fig. 1 zur Mittelachse des Führungskörpers (4) hin abgewinkelt ausgebildet, sondern geradlinig ausgebildet. Wird dafür Sorge getragen, dass bei Verwendung der Lehre der geradlinig ausgebildete Holm (2) jeweils oben im bereits verlegten Rohr (29) zu liegen kommt, so dienen die abgewinkelten Abschnitte (5 und 7) der Holme (1) und (3) nach wie vor zur Führung des zu

verlegenden Rohres. Der geradlinige Holm (2) verhindert jedoch, dass das vordere Ende des zu verlegenden Rohres zu weit nach unten gelangt und durch Berührung mit dem Erdboden verschmutzt wird.

Wie die Fig. 8 weiter zeigt, ist im Holm (2) ein Hebel (32) um eine zum Führungskörper (4) tangentiale Achse schwenkbar gelagert. Der Hebel (32) weist einen kurzen Hebelarm (33) und einen längeren Hebelarm (34) auf, so dass aufgrund des Schwergewichtes der Hebelarm (33) bei Anordnung der Lehre mit dem Holm (2) nach oben jeweils in der in Fig. 8 gezeichneten Stellung ist.

Wird die Lehre mit ihrem Holm (2) nach oben in ein bereits verlegtes Rohr (29) eingeschoben, so wirkt der Hebelarm (33) zusammen mit der Muffe des bereits verlegten Rohres (29) als Begrenzungsanschlag, wie es in Fig. 8 gezeigt ist.

Die Lehre kann daher beim Einsetzen in das bereits verlegte Rohr nicht weiter als bis zum Eingriff des Hebelarmes (33) mit der Muffe des bereits verlegten Rohres geschoben werden. Weiterhin verhindert der Hebel (32) ein Einschieben der Lehre in das bereits verlegte Rohr beim unbeabsichtigten Anstossen der Lehre durch das zu verlegende Rohr. Wird jedoch das zu verlegende Rohr über die Lehre geschoben, so kann das vordere Ende des zu verlegenden Rohres den kürzeren Hebelarm (33) des Hebels (32) nach unten schwenken, so dass der Hebel ausser Eingriff mit der Muffe kommt.

## Patentansprüche

1. Verstellbare Lehre zum Verlegen von Rohren, bestehend aus einem Führungskörper (4), der drei etwa in gleichem Abstand zueinander angeordnete, etwa parallel zueinander verlaufende Holme (1, 2, 3) aufweist, deren vordere Endabschnitte (5, 6, 7) zur Mittelachse des Führungskörpers hin abgewinkelt ausgebildet sind, und mit einer Spannvorrichtung (16, 17, 20) zur Arretierung der in einem Rohr eingesetzten Lehre im Rohrinneren, dadurch gekennzeichnet, dass zwei Holme (1, 2) fest miteinander verbunden sind, dass der dritte Holm (3) mit dem einen Ende von Querstegen (10, 11) fest verbunden ist, deren andere Enden mit dem einen der beiden fest verbundenen Holme (2) um in Holmlängsrichtung verlaufende Achsen (12, 13) schwenkbar verbunden sind, und dass zwischen dem dritten Holm (3) und dem vorderen Holm (1) der beiden fest miteinander verbundenen Holme die Spannvorrichtung (16, 17, 20) zum Auseinanderspreizen der Holme angeordnet ist.

2. Lehre nach Anspruch 1, dadurch gekennzeichnet, dass mit dem dritten Holm (3) die einen Enden (14, 15) von Hebeln (16, 17) gelenkig verbunden sind, deren andere Enden (18, 19) auf dem anderen Holm (1) der beiden fest miteinander verbundenen Holme verschiebbar geführt sind, wobei in Arretierstellung die Hebel etwa rechtwinklig zu den Holmen (3, 1) stehen.

3. Lehre nach Anspruch 1 oder 2, dadurch gekennzeichnet, dass die Spannvorrichtung (16, 17) ein im Innern des Führungskörpers (4) verlaufendes Bedienelement (20) hat, das einen von Hand oder mit einem Haken ergreifbaren Handgriff (23) im vorderen Abschnitt des Führungskörpers trägt.

4. Lehre nach Anspruch 3, dadurch gekennzeichnet, dass das Bedienelement der Spannvorrichtung als Stange ausgebildet ist, die mit den Hebeln (16, 17) gelenkig verbunden ist.

5. Lehre nach Anspruch 2, dadurch gekennzeichnet, dass der eine Hebel (17) nahe dem vorderen Ende und der andere Hebel (16) am hinteren Ende des Führungskörpers (4) angeordnet ist.

6. Lehre nach Anspruch 4 oder 5, dadurch gekennzeichnet, dass die Länge der als Bedienelement (20) ausgebildeten Stange zwischen den Hebeln (16, 17) veränderbar und festlegbar ist.

7. Lehre nach einem der Ansprüche 1 bis 6, dadurch gekennzeichnet, dass zwischen dem dritten Holm (3) und dem anderen Holm (1) der beiden fest miteinander verbundenen Holme eine vorgespannte Feder (25) oder dgl. angeordnet ist.

8. Lehre nach einem der Ansprüche 1 bis 7, dadurch gekennzeichnet, dass die Länge der Stege (8) und (9), der Querstege (10) und (11) und der Hebel (16) und (17) teleskopartig einstellbar und festlegbar ist.

9. Lehre nach einem der Ansprüche 1 bis 8, dadurch gekennzeichnet, dass der vordere Abschnitt (31) eines Holmes (2) geradlinig ausgebildet ist.

10. Lehre nach einem der Ansprüche 1 bis 9, dadurch gekennzeichnet, dass in einem Holm (2) ein Hebel (32) um eine zum Führungskörper (4) tangentiale Achse schwenkbar gelagert ist, wobei der Hebel von einer vorgespannten Feder oder dgl. derart gehalten ist, dass ein Hebelarm (33) des Hebels (32) den Holm nach aussen überragt.

11. Verfahren zum Einschieben eines Endes eines Rohres in das muffenartige Ende eines anderen Rohres mit Hilfe der Lehre nach einem der Ansprüche 1 bis 10, dadurch gekennzeichnet, dass zunächst die Lehre derartig in das Innere des anderen Rohres (29) eingesetzt und arretiert wird, dass der konisch sich verjüngende Endabschnitt sowie ein kleiner zylindrischer Abschnitt der Lehre das muffenartige Ende des anderen Rohres überragen, dass dann das eine Ende des einen Rohres über die Lehre in das muffenartige Ende des anderen Rohres geschoben wird und dass anschliessend die Lehre gelöst und durch das eine Rohr aus dem anderen Rohr herausgezogen wird.

## Claims

1. An adjustable gauge for laying pipes, consisting of a guide body (4) having three spars (1, 2, 3) which are arranged approximately at an equal distance from one another and which extend approximately parallel to one another and the front end portions (5, 6, 7) of which are angled towards the central axis of the guide body, and a clamping device (16, 17, 20) for locking the gauge, inserted in a pipe, in the interior of the pipe, characterised in that two spars (1, 2) are connected securely together, in that the third spar (3) is connected securely to the one end of crossbars (10, 11), the other ends of which are connected to one of the two securely connected spars (2) so as to be swingable about axes (12, 13) extending in the spar longitudinal direction, and in that the clamping device (16, 17, 20) for spreading the spars apart is arranged between the third spar (3) and the front spar (1) of the two spars which are connected securely together.

2. A gauge according to claim 1, characterised in that connected hingedly to the third spar (3) are the one ends (14, 15) of levers (16, 17), the other ends (18, 19) of which are guided displaceably on the other spar (1) of the two spars which are connected securely together, in which respect in the locking position the levers stand approximately at a right angle to the spars (3, 1).

3. A gauge according to claim 1 or 2, characterised in that the clamping device (16, 17) has an operating element (20) which extends in the interior of the guide body (4) and which carries a handle (23), graspable by hand or with a hook, in the front region of the guide body.

4. A gauge according to claim 3, characterised in that the operating element of the clamping device is designed as a rod which is connected hingedly to the levers (16, 17).

5. A gauge according to claim 2, characterised in that the one lever (17) is arranged near the front end and the other lever (16) is arranged at the rear end of the guide body (4).

6. A gauge according to claim 4 or 5, characterised in that the length of the rod, designed as operating element (20), between the levers (16, 17) is variable and securable.

7. A gauge according to one of claims 1 to 6, characterised in that the biased spring (25) or the like is arranged between the third spar (3) and the other spar (1) of the two spars which are connected securely together.

8. A gauge according to one of claims 1 to 7, characterised in that the length of the crosspieces (8) and (9), of the crossbars (10) and (11) and of the levers (16) and (17) is telescopically adjustable and securable.

9. A gauge according to one of claims 1 to 8, characterised in that the front portion (31) of one spar (2) extends in a straight line.

10. A gauge according to one of claims 1 to 9, characterised in that in one spar (2) a lever (32) is mounted so as to be swingable about an axis tangential to the guide body (4), in which respect the lever is held by a biased spring or the like in such a way that one lever arm (33) of the lever (32) projects outwardly beyond the spar.

11. A method of inserting one end of a pipe into the socket-like end of another pipe with the assistance of a gauge according to one of claims 1 to 10, characterised in that first of all the gauge is inserted in such a way into the interior of the other pipe (29) and locked that the conically tapering end portion as well as a small cyclindrical portion of the gauge project beyond the socket-like end of the other pipe, in that then the one end of the one pipe is pushed by way of the gauge into the socket-like end of the other pipe and in that then the gauge is released and is drawn out of the other pipe through the one pipe.

## Revendications

1. Gabarit réglable pour poser des tuyaux, comprenant d'une part un corps de guidage (4) formé de trois longerons (1), (2), (3) sensiblement équidistants et parallèles entre eux, dont le tronçon d'extrémité (5), (6), (7) est incurvé en direction de l'axe général du corps de guidage, et d'autre part, un dispositif de serrage (16), (17), (20) pour fixer en place dans l'intérieur d'un tuyau, le gabarit qu'on y a introduit, caractérisé en ce que deux longerons (1), (2) sont reliés de façon rigide, tandis que le troisième longeron (3) est rigidement solidaire de l'une des extrémités de traverses (10), (11) ayant leur autre extrémité articulée par un axe longitudinal (12), (13) sur l'un (2) des longerons (1), (2), rigidement liés entre eux, alors qu'enfin, le dispositif de serrage (16), (17), (20) est disposé entre le troisième longeron (3) et le longeron avant (1) des deux (1) et (2) rigidement solidaires, pour écarter les longerons au moment du serrage.

2. Gabarit suivant la revendication 1, caractérisé en ce que sur le troisième longeron (3) est articulée une extrémité (14), (15) de leviers (16), (17) dont l'extrémité opposée (18), (19) est guidée au coulissement sur l'autre (1) des deux longerons (1), (2) rigidement solidaires, tandis qu'en position d'arrêt, les leviers se trouvent sensiblement perpendiculaires aux longerons (3), (1).

3. Gabarit suivant l'une quelconque des revendications 1 et 2, caractérisé en ce que le dispositif de serrage (16), (17) comprend un élément de commande (20) qui s'étend à l'intérieur du corps de guidage (4) et qui possède au niveau du tronçon avant du corps de guidage, une poignée (23) susceptible d'être actionnée à la main ou à l'aide d'un crochet.

4. Gabarit suivant la revendication 3, caractérisé en ce que l'élément de commande (20) du dispositif de serrage est constitué par une tringle articulée sur les leviers (16), (17).

5. Gabarit suivant la revendication 2, caractérisé en ce que l'un (17) des leviers se trouve près de l'extrémité avant du corps de guidage (4), alors que l'autre (16) se trouve près de son extrémité arrière.

6. Gabarit suivant l'une quelconque des revendications 4 et 5, caractérisé en ce que la longueur de la partie de l'élément de commande (20) située entre les leviers (16), (17) peut être modifiée et verrouillée à la valeur voulue.

7. Gabarit suivant l'une quelconque des revendications 1 à 6, caractérisé en ce qu'entre le troisième longeron (3) et l'autre (1) des deux longerons rigidement solidaires, se trouve un ressort sous tension (25).

8. Gabarit suivant l'une quelconque des revendications 1 à 7, caractérisé en ce que les entretoises (8) et (9), les traverses (10) et (11), et les leviers (16) et (17) sont télescopiques, ce qui permet de modifier leur longueur et de la fixer à la valeur voulue.

9. Gabarit suivant l'une quelconque des revendications 1 à 8, caractérisé en ce que le tronçon avant (31) d'un longeron (2) est rectiligne.

10. Gabarit suivant l'une quelconque des revendications 1 à 9, caractérisé en ce que dans un longeron (2) est articulé, autour d'un axe orienté tangentiellement par rapport au corps de guidage (4), un levier basculant (32) que sollicite un ressort ou analogue de façon que l'un (33) des bras du levier (32) dépasse vers l'extérieur du longeron.

11. Procédé pour engager l'extrémité d'un premier tuyau dans l'embouchure en forme de manchon d'un second tuyau (29) au moyen d'un gabarit suivant l'une quelconque des revendications 1 à 10, caractérisé en ce qu'on commence par introduire et verrouiller le gabarit dans le tuyau (29) de façon que son tronçon d'extrémité à forme convergente et un court tronçon cylindrique dépassent hors du manchon du tuyau (29), si bien que l'extrémité du premier tuyau peut être engagée sur le gabarit, puis dans le manchon du second tuyau (29), après quoi on desserre le gabarit qui est enfin extrait hors du second tuyau (29) à travers le premier tuyau.

Fig. 1

Fig. 2

Fig. 3

Fig. 4

Fig. 5

Fig. 6

Fig. 7

Fig. 8

Fig. 9